# EUROPEAN PATENT APPLICATION

(11) **EP 1 727 327 A1**
(43) Date of publication of application: **29.11.2006**
(21) Application number: 05076895.1
(22) Date of filing: 16.08.2005
(51) Int. Cl.: H04L 29/06

(54) **Method to register a user at a service**

(30) Priority: 25.05.2005 NL 1029123
(71) Applicant: Nederlandse Organisatie voor Toegepast-Natuurwetenschappelijk Onderzoek TNO, 2628 VK Delft (NL)
(72) Inventor: Joosten, Hendrikus Johannes Maria, 9301 LZ Roden (NL); Kleinhuis, Geert, 9264 TX Eernewoude (NL); Veugen, Peter Joannes Mathias, 2272 WN Voorburg (NL)
(74) Representative: Winckels, Johannes Hubertus F.

(57) **Abstract**

Method for the registration of a user (E) at a service (RA1) which is part of a subdomain (D1). The user asks registration at said service under identity Id1. The service requests a registration service (RA) outside the subdomain and/or another service (RA2) within the same subdomain to send a subdomain specific user code (IdKeyl) which is valid within the subdomain concerned. If the requested subdomain specific user code does not exist, the registration service asks the user to send a user code (Id) which is valid for that registration server, after which the registration service generates a subdomain specific user code (IdKeyl) being valid for the subdomain concerned, e.g. by means of a cryptographic operation, such as "secure hashing", of a secret, not subdomain specific user code (IdKey). If the requested subdomain specific user code (IdKey1) already exists or after being generated by the registration service, this code is sent to the service (RA1) where the user asks to be registered.

## Description

### Field

The invention concerns a method to register a user at a service which is accessible via a network and which is part of a subdomain.

### Background

Generally known is that users can register at services which are accessible via a network (e.g. the Internet) by means of e.g. a username and password, with which users can identify and authenticate themselves afterwards during "logging in" at the service concerned.

As a problem can be felt that one user can register at different services under different usernames. Particularly this can be a problem if was registered at services more or less belonging to a cluster of services which organizationally and/or technically belong to the same conglomerate or, to be called herinafter, subdomain, e.g. different services offered by a modern telecom operator offering telephony, data and internet related services, usually divided further into services for ISDN, ADSL, Internet access, mail services etc. etc. Usually, new users can register at those services under a self-chosen username (ID). The result is that the organization, e.g. the telecom operator, managing the different services, in fact does not have an image about the profile of the user who after all is able to pose under different, not-related usernames.

So, at the side of operators of more or less (organizational, technical and/or commercial) linked services the need is felt to form, without making violation of the privacy of the individual users, a more or less complete image of the profiles of those users, in order to be able to base on such profile information new or adjusted facilities, rates, etc. and e.g. to offer those facilities differentiated to profile sort.

One solution direction is the use of a universal ID (UID) as e.g. a National Insurance Number. However, in practice this gives rise to the following problems:
- Information collected by parties concerned with the help of UIDs simply can be related to each other, which could result into privacy problems.
- Besides, this kind of translation systems are mostly the property of commercial parties, which can provide problems, as e.g. in the case ChoicePoint (see www.siliconvalley.com/mld/siliconvalley/news-/editorial/11276462.htm).

### Summary

The present invention aims to meet said objections by providing a method for registering a user (or user entity) at a service which is accessible via a network and which is part of a subdomain, the method comprising next steps:
- the user asks registration at the relevant service;
- the service requests a registration service outside the same subdomain and/or another service within the same subdomain to send a subdomain specific user code which is (only) valid within the subdomain;
- if the requested subdomain specific user code does not exist, the registration service asks the user to send a user code which is valid for that registration server, after which the registration service generates a subdomain specific user code which is valid for the subdomain;
- if the requested subdomain specific user code already exists or after it has been generated by the registration service, this code is sent to the service where the user asks to be registered. This service is able to store the subdomain specific user code together with other data like (service specific) user code (log-in name, username) and password of the new user. In this way it is achieved that to a (new) user who registers at a service, a subdomain specific user code is assigned, which is equal for all services within the same subdomain. By this especially a party having the management over that subdomain, e.g. a telecom operator, is able to formulate a reliable user profile of that user, based on the (additionally) registered subdomain specific user code, viz. by collecting information at various services (within the same subdomain) in which the user has been registered.

It is noted that in the case that the requested subdomain specific user code does not exist, the registration service will ask the user to send a user code which is valid for that registration server, after which the registration service is able to generate a subdomain specific user code. If the user wishes to abandon such a "subdomain wide" registration, then the user can inform the registration server so. Besides, it is noted that the user, if not already done, has to make, at any moment, an initial registration at the registration server, after which the user will be able to authenticate at the registration server. The registration server can serve various subdomains. However, the user needs to register - initially- at this (generic) registration server once, which registration is valid and can be used then for the subsequent generation of subdomain specific user codes for each served subdomain.

If the user - in the initial phase- registers at the registration server, the registration server preferably generates a generic, not subdomain specific user code, which serves as a basis for the generation of subdomain specific user codes. In view of the privacy, a not subdomain specific user code prefably is a secret code which e.g. is used as a "secret key" in a cryptographic process which is appropriate for the generation of the subdomain specific user code concerned. So the registration service may generate the subdomain specific user code by means of a cryptographic operation of the subdomain-using a code indicating th subdomain- and the not subdomain specific user code, viz. the "secret key". The cryptographic operation is e.g. a "secure hash" operation of the subdomain (viz. a subdomain indicator code) and the not subdomain specific user code.

Systems which make use of the method presented here and which are located within the same subdomain (e.g. within a company or a country), will thus be able to recognize each user every time again as the same one, viz. by his (her/its) subdomain specific user code, regardless of the different e.g. self chosen identities with which the user is registered at different services and regardless of the method of authentication applied.

For e.g. public bodies it means that citizens do not need to input their data every time again if they have to fill in an (electronic, digital) form. For e.g. a company it means that a customer can not pose as another anymore e.g. to be recognized as a defaulter.

The method presented here does not allow that user information over the borders of subdomains can be exchanged based on the identity of the user.

The proposed method leads to more transparency in relation to the storage and exchange of data and to better data protection.

The invention meets the objections of the existing methods as follows:
- No privacy problems will arise anymore caused by interlinking identities of different subdomains . After all, to this end it is required to retrieve the not subdomain specific user code. And that is only possible if that code for all participating subdomains gets a status which is equal to or comparable with the status of a code distributed (supra domein) "Trusted Third Party" (TTP), which TTP status is assigned to the registration server.
- It cannot be prevented that information is linked, but it can be prevented that such happens by means of identities (such as the subdomain specific user codes). So to be able to link information, active participation of parties within different subdomains is needed, and in that case the parties can be held responsible for it.
- By means of the method presented here it is guaranteed that each user (entity) within a certain subdomain has exactly one universal identity for that subdomain, regardless of the authentication method, if each service follows the registration protocol according to this method (discussed more in detail below). In this way each user of any service within a subdomain will always be recognised as the same user (entity), such as is necessary e.g. for registrations in conformity with the American Sarbanes-Oxley Act which was instituted to protect investors against fraudulent accounting practices at companies.

### Exemplary embodiment

Figure 1 shows schematically the example of a system which is adapted to carry out the above presented method.
Figure 2 shows the schematic representation of an example protocol P1 which is derived from the presented method.
Figure 3 shows the schematic representation of a supplementary example protocol P2.

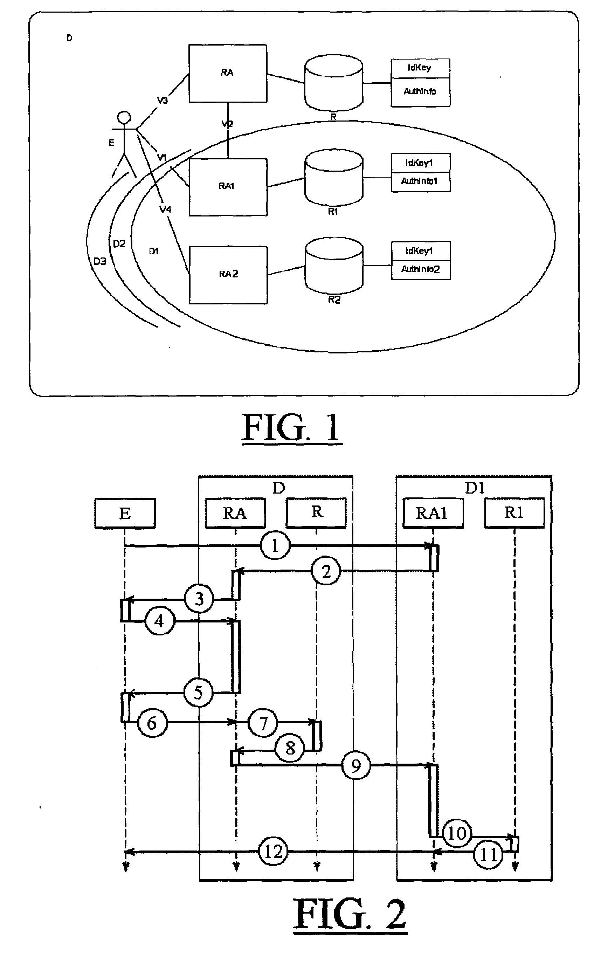

Figure 1 shows a (supra) domain D, comprising a registration authority RA which keeps up a register R of entities (users) which are registered in that domain. Register R comprises records which link per user -here indicated as entity E- a not subdomain specific user code IdKey and authentication information (e.g. username/password) AuthInfo, at which:
1. each IdKey identifies one of the registered entities in domain D and each registered entity has its own, unique IDKey;
2. IdKey is a search key with which the corresponding AuthInfo of the entity concerned can be found;
3. register R does not know more than one IdKey for any entity in domain D;
4. AuthInfo is a bit row within register R, which can be used to find the IdKey which identifies an entity E within domain D by means of information (e.g. username/password) resulting from a successfull authentication procedure.
5. AuthInfo can be (re)constructed with the help of the information which has been (come) available in protocol step 3 of the protocol P2 to be discussed herinafter.

Note that because of the above mentioned properties 1 and 2, IdKey is an identity for the entity which it identifies. However, this identity IdKey is not made known by the RA within any subdomain of D (D1, D2, etc.), nor outside domain D itself, except for to an any possible super domain of D (if that does exist), if at least there exist compelling reasons for that. Therefore it is of interest that RA is a reliable (trusted) party for the (whole) domain. Should there be needed a universal identity for the whole domain D, this simply can be derived from IdKey, e.g. by means of a secure hash function, without compromising IdKey.

Each entity E which has been registered in domain D, has an identity Id within domain D and an identity token IdT by means of which the RA within domain D can verify that Id belongs to IdT according to register R. Note that:
- it depends on the used authentication method wether or not it is necessary for authentication service AS to consult register R.
- if E should authenticate with identity Id and IdT at RA according to protocol P2, RA is able to construct AuthInfo from the information coming from P2 via protocol step 3, and with that can retrieve the IdKey of E.
- RA is the only one which can retrieve the IdKey of E

The protocol P1, showed in figure 2, runs as follows:
1. If entity E wishes to register itself at a service RA1 within a domain D1, E and RA1 set up a sufficiently protected connection V1, in which E authenticates RA1 with a sufficient extent of certainty. Note that RA1 does not (yet) authenticate E. E sends a request to RA1 via V1 to be registered under identity Id1.
2. RA1 and RA set up a sufficiently protected connection V2, at which RA1 and RA authenticate each other with a sufficient extent of certaincy. RA1 sends the request of E to RA via V2.
3. RA and E set up a sufficiently protected connection V3 at which E asks RA to identify itself.
4. E sends identity Id and identity token IdT to RA (via V3).
5. RA authenticates E by means of Id and IdT. If that does not succeed, the protocol stops. If it does succeed, RA presents the request to E via V3, and asks E to agree.
6. E sends an agreement or non-agreement to RA via V3. (After this connection V3 is not used anymore.) At a non-agreement the protocol stops.
7. RA constructs by means of Id and IdT the Authinfo, after which RA asks the register R for the unique IdKey belonging to E, which the register R can retrieve by means of Authinfo.
8. Register R sends the retrieved IdKey to RA. RA creates, e.g. by generating a "secure hash" of a code C1, characterizing subdomain D1 univocally, and the unique IdKey of user E, a bit row IdKey 1 with the following properties:
   a. IdKey 1 identifies E within subdomain D1, i.e. there is within subdomain D1 not any other entity E' which is or can be identified by bit row IdKey1.
   b. Not any bit row IdKey1' created by RA before and being unequal to IdKey1, can be used to identify E within D1.
   c. Not any subdomain of D different from D1 is able to use bit row IdKey1 for the identification of E.
   d. There is no method known by which Id can be calculated from bit row IdKey1 in a feasable way in a reasonably limited time without consulting register R.
9. RA sends IdKey1 to RA1 via V2 (After this, connection V2 is not used anymore). RA1 makes identity token IdT1, a token by means of which E is able to authenticate afterwards with identity Id1 within subdomain D1. RA1 makes AuthInfo1 by means of e.g. Id1, IdT1 or possibly other information, such that all requirements for the AuthInfo data type will be met.
10.Ra1 sends IdKey1 and the calculated AuthInfo to register R1 with the request to save it.
11. Register R1 sends 'ok' to RA as soon as this has been done.
12.RA1 sends IdT1 to E via V1. (After this, connection V1 is not used anymore).

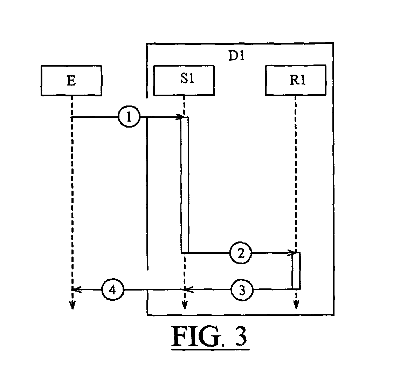

Figure 3 shows an extension to the standard authentication protocol which would be used without the method according to the invention.

Protocol P2 runs as follows:
1. Entity E and server S (which is also situated within subdomain D1) set up a connection V4, at which E informs S that it has identity Id1 and that IdT1 is the corresponding identity token. Server S verifies whether Id1 is registered within domain D1, at which the identity token IdT1 is used in the usual way to determine the authenticity of Id1. Note that this does not ask any requirements to the used authentication method. If Id1 could not be verified (i.e. it is unknown, or the authentication failed), the protocol stops or, if necessary, this step will be repeated.
2. S asks the own register R, with the help of the AuthInfo, constructed (or had construct) by S by means of Id1 and IdT1, for the IdKey1 belonging to E, which register R retrieves (or lets retrieve), e.g. by consulting or let consult the register R1 of RA1), which is possible because this AuthInfo identifies E univocally within subdomain D1.
3. Register R sends the IdKey1 belonging to Authinfo to server S, which IdKey1 identifies E within subdomain D1. By this E has been authenticated and S has at its disposal an identifier for E which is (universally) valid within subdomain D1 and which is independent of the used authentication method and/or Id1 and/or IdT1.
4. Server S informs entity E that its identity Id1 has been authenticated.

## Claims

1. Method for the registration of a user (E) at a service (RA1) which is accessible via a network and which is part of a subdomain (D1), which method comprises the next steps:
- the user asks registration at said service;
- the service requests a registration service (RA) outside the same subdomain or another service (RA2) within the same subdomain, or both of them, to send a subdomain specific user code (IdKey1) which is valid within the subdomain concerned;
- if the requested subdomain specific user code does not exist, the registration service (RA) asks the user to send a user code (Id) which is valid for that registration server, after which the registration service generates a subdomain specific user code (IdKey1) which is valid for the subdomain concerned;
- if the requested subdomain specific user code (IdKey1) already exists or after being generated by the registration service, it is sent to the service (RA1) where the user asks to be registered;

2. Method according to claim 1, wherein, if the requested subdomain specific user code does not exist and the registration service asks the user to send the user code (Id1) which is valid for that registration server, the registration service generates said subdomain specific user code (IdKey1) which is valid for the subdomain concerned, from a not subdomain specific user code (IdKey);

3. Method according to claim 2, the registration service generating the subdomain specific user code (IdKey1) from a secret not subdomain specific user code (IdKey).

4. Method according to claim 2 or 3, the registration service generating the subdomain specific user code (IdKey1) by means of a cryptographic operation of the subdomain concerned (D1) and the not subdomain specific user code (IdKey).

5. Method according to claim 4, the cryptographic operation comprising a "secure hash" operation of an indication of the subdomain concerned (D1) and the not subdomain specific user code (IdKey).

6. Method according to claim 4, the cryptographic operation comprising the digital signing of an identification of the subdomain concerned (D1) and the not subdomain specific user code (IdKey).
